# EUROPEAN PATENT APPLICATION

(11) **EP 4 574 893 A1**
(43) Date of publication of application: **25.06.2025**
(21) Application number: 23217618.0
(22) Date of filing: 18.12.2023
(51) Int. Cl.: C08L 23/06, C08K 3/34, C08K 5/00, C08K 5/3475

(54) **BARIUM MAGNESIUM SILICATES AND 2-HYDROXYPHENYLBENZOTRIAZOLE UV ABSORBERS IN A GREENHOUSE FILM**

(71) Applicant: RHODIA OPERATIONS, 69003 Lyon (FR)
(72) Inventor: MAKRYGENNI, Ourania, Lyon (FR); HARLE, Virginie, Lyon (FR); PELLERIN, Morgane, Ville (FR); CHO, Jian-Yang, Stamford, CT (US); REVEST, Xavier, Ville (FR)
(74) Representative: Kraus & Lederer PartGmbB

(57) **Abstract**

The present invention relates to a composition comprising a matrix material comprising a polymer, barium magnesium silicate (BMS), and a 2-hydroxyphenylbenzotriazole compound.

## Description

### TECHNICAL FIELD

The present invention relates to a composition comprising a matrix material comprising a polymer, a barium magnesium silicate (BMS), and a 2-hydroxyphenylbenzotriazole compound. This composition can be used as additive in the composition of greenhouse films to boost production of fruits or flowers.

### TECHNICAL BACKGROUND

Greenhouse films are used ubiquitously in agriculture to ensure optimal plant development. The addition of photoconversion additives has been reported to boost the production of fruits or flowers. Those photoconversion additives are converting the UV part of the natural light into visible light in the range of 400 nm to 700 nm. This shift is increasing the photoactive radiation in the visible range that is useful for the growing of the crops.

Different types of photoconversion greenhouse additives have already been reported such as organic fluorophores marketed as LIGHT CASCADE^{®}. Another example of photoconversion additive is the use of CuInS₂/ZnS quantum dots as disclosed in WO 2018/209000 A1.

Even if those additives are efficient to convert the UV part of natural light into visible light, there is a lack of durability. The capacity to convert UV into visible light is reducing over time and the benefit is limited in time.

Addition of inorganic stable material like barium magnesium silicate (BMS) as photoconversion additive to greenhouse films is disclosed in WO 2021/069755 A1.

However, in practice, this concept of using photoconversion additives has not been fully successful yet. The prior art greenhouse films using photoconversion additives, even using inorganic stable additive, such as BMS, suffer from stability problems, i.e. the greenhouse films are not stable over years, and/or suffer from compatibility problems of the photoconversion additive with other additives of greenhouse films, such as UV absorbers.

Therefore, it is an object of the present invention to provide a composition for a greenhouse film that maintains mechanical properties and capacity to transmit light over time while maintaining an excellent photoconversion effect. In addition, it is an object of the present invention to provide a composition for a greenhouse film that has durable properties while facilitating plant pollination by insects.

### SUMMARY OF THE INVENTION

These objects have surprisingly been solved by composition comprising:
(a) 80 wt.-% to 99 wt.-% of a matrix material comprising a polymer;
(b) 0.5 wt.-% to 5 wt.-% of a barium magnesium silicate; and
(c) 0.01 wt.-% to 0.15 wt.-% of a 2-hydroxyphenylbenzotriazole compound.

It has been found that the composition of the present invention allows to provide a greenhouse film with high light transmission and excellent mechanical stability over time. Furthermore, it has been found that such a composition allows to produce a greenhouse film that provides excellent photoconversion, even over an extended period of time. Furthermore, it has surprisingly been found that plant pollination by insects, such as bumblebees, is not detrimentally influenced by the composition of the present invention.

In an aspect, the present invention relates to the use of barium magnesium silicate for preparing the composition of the present invention, wherein the barium magnesium silicate is in the form of a powder; or is a mixture with a polymer, the mixture being in the form of a granulate.

In an aspect, the present invention relates to a film, preferably a greenhouse film, comprising the composition of the present invention.

In another aspect, the present invention relates to the use of the composition of the present invention as greenhouse film for facilitating crop growth.

In another aspect, the present invention relates to a kit of parts comprising:
(b) a barium magnesium silicate, and
(c) a 2-hydroxyphenylbenzotriazole compound;
wherein the wt.-ratio of (b) the barium magnesium silicate to (c) the 2-hydroxyphenylbenzotriazole compound is 4:1 to 200:1.

### DETAILED DESCRIPTION OF THE INVENTION

The following definitions are relevant in connection with the embodiments of the present invention.

The meaning of the term "comprising" is to be interpreted as encompassing all the specifically mentioned features as well optional, additional, unspecified ones, whereas the term "consisting essentially of" is to be interpreted as follows "a composition consisting essentially of" means that other elements in addition to the specifically mentioned features can be present such as impurities, provided that the essential characteristics of the claimed composition are not materially affected by the presence of said other elements. All the technical features and embodiments previously disclosed also apply to this particular composition.

Therefore, "comprising" includes as a limiting case the composition specified by "consisting essentially of'.

The term "wt. %" refers to the amount of the respective ingredient by weight based on the total amount of the composition, unless noted otherwise.

As used herein, the singular forms "a", "an", and "the" include both singular and plural referents unless the context clearly dictates otherwise. By way of example, "a polymer" means one polymer or more than one polymer.

The term greenhouse film stability refers to mechanical resistance of the film as well as capability of the film to transmit light over time.

According to the present invention, as the "matrix comprising a polymer", a transparent photosetting polymer, a thermosetting polymer, a thermoplastic polymer, glass substrates (further comprising a polymer) or a combination of any of these, can be used preferably.

The term barium magnesium silicate may refer to a compound of formula (1) of Ba₍₃₋ₓ₎EuₓMg_{(1-y)}Mn_{y}Si₂O₈ (I), wherein 0<x<1.5 and 0<y<0.5.

Unless noted otherwise, "the composition" refers to the composition of the present invention.

The term "2-hydroxyphenylbenzotriazole compound" is well-known to the skilled person. This is a UV absorber. Suitable 2-hydroxyphenylbenzotriazole compounds can *inter alia* be found in the book "Databook of UV Stabilizers", A Wypych et al., 2nd edition, ChemTec publishing, 2020 under "benzotriazoles", pp. 109 to 210.

Preferred embodiments according to the invention are defined hereinafter. The preferred embodiments are preferred alone or in combination. Further, it is to be understood that the following preferred embodiments refer to all aspects of the present invention, i.e. the composition, the film as well as the use of composition and the kit of parts.

In an embodiment, the present invention relates to a composition comprising:
(a) 80 wt.-% to 99 wt.-% of a matrix material comprising a polymer;
(b) 0.5 wt.-% to 5 wt.-% of a barium magnesium silicate; and
(c) 0.01 wt.-% to 0.15 wt.-% of a 2-hydroxyphenylbenzotriazole compound.

In one embodiment the remainder up to 100% can consist of impurities or another compound as defined below such as an additional inorganic fluorescent material, a plasticizer or a UV absorber.

In an embodiment, the matrix consists essentially of, i.e. is, a polymer. Thus, in an embodiment, the composition comprises:
(a) 80 wt.-% to 99.49 wt.-% of a polymer;
(b) 0.5 wt.-% to 5.0 wt.-% of a barium magnesium silicate; and
(c) 0.01 wt.-% to 0.15 wt.-% of a 2-hydroxyphenylbenzotriazole compound.

In an embodiment, the present invention relates to a composition comprising:
(a) 80 wt.-% to 99.49 wt.-% of a matrix material comprising a polymer;
(b) 0.5 wt.-% to 5 wt.-% of a barium magnesium silicate; and
(c) 0.01 wt.-% to 0.15 wt.-% of a 2-hydroxyphenylbenzotriazole compound.

In a preferred embodiment, the barium magnesium silicate is of Formula (I):

Ba₍₃₋ₓ₎EuₓMg_{(1-y)}Mn_{y}Si₂O₈ (I),

wherein
0<x<1.5 and 0<y<0.5, preferably 0<x<0.75. and 0<y<0.25, more preferably
0.03<x<0.60. and 0.03<y<0.15. In a preferred embodiment, 0<x<1.5 and
0<y<0.25.

The barium may be partially replaced with calcium and/or strontium in a proportion that may be up to about 30 %, this proportion being expressed by the (calcium and/or strontium)/(calcium and/or strontium+barium) atomic ratio. The magnesium may be partially replaced with zinc in a proportion that may be up to about 30%, this proportion also being expressed by the Zn/(Zn+Mg) atomic ratio. Finally, the silicon may be partially replaced with germanium, aluminium, boron and/or phosphorus in a proportion that may be up to about 10 %, this proportion being expressed by the replacement/(replacement+silicon) atomic ratio.

In an embodiment, the barium magnesium silicate is a compound of formula (II):

aMO.a', M', O.bM"O.b', M‴, O.cSiO 2 (II)

wherein: M and M" are selected from the group constituted of from: strontium, barium, calcium, zinc, magnesium or a combination of these and M' and M‴ are selected from: europium, manganese, praseodymium, gadolinium, yttrium with 0.5<a<3, 0.5<b<1 0<a'<1.5, 0<b'≤0.5 and l≤c≤2.

In an embodiment, the composition comprises 0.5 wt.-% to 3.0 wt.-% of Ba_{2.7}Eu_{0.3}Mg_{0.9}Mn_{0.1}Si₂O₈ and/or Ba_{2.94}Eu_{0.06}Mg_{0.95}Mn_{0.05}Si₂O₈. In an embodiment, the composition comprises 0.5 wt.-% to 2.0 wt.-% of Ba_{2.7}Eu_{0.3}Mg_{0.9}Mn_{0.1}Si₂O₈ and/or Ba_{2.94}Eu_{0.06}Mg_{0.95}Mn_{0.05}Si₂O₈. It is particularly preferred that the barium magnesium silicate is Ba_{2.7}Eu_{0.3}Mg_{0.9}Mn_{0.1}Si₂O₈.

In an embodiment, the composition may also comprise BaSiO₄, BaMgSiO₄, and/or Ba₂MgSi₂O₇. The different components can be evidenced by X Ray diffraction and identified according to ICDD (the International Centre for Diffraction Data) database: PDF 04-021-0346 for Ba₃MgSi₂O₈, PDF 01-084-4279 for Ba₂SiO₄, PDF 04-011-3561 for BaMgSiO₄ and PDF 01-080-6416 for Ba₂MgSi₂O₇.

In an embodiment, the composition of the present invention further comprises BaSiO₄, BaMgSiO₄, and/or Ba₂MgSi₂O₇.

The synthesis of such barium magnesium silicates is disclosed in WO 2021/069756, WO 2004/044090, and WO 2004/041963.

The barium magnesium silicate may be ground or micronized, screened and/or surface treated. This can increase the compatibility or dispersion in the matrix comprising a polymer. It is preferred that the barium magnesium silicate has a volume-based D₅₀ particle size of 0.1 µm to 200 µm, more preferably of 1 µm to 50 µm, more preferably 2 µm to 20 µm, even more preferably 2 µm to 15 µm. It is preferred that the barium magnesium silicate has a volume based D₉₀ particle size of 1 µm to 500 µm, more preferably 1 µm to 200 µm, even more preferably 10 µm to 60 µm. The volume-based particle sizes, including D₅₀ and D₉₀ is preferably measured by laser diffraction using a laser diffraction particle size analyzer, such as an Mastersizer 3000 from Malvern analytical.

The composition of the present invention may comprise 0.5 wt.-% to 5.0 wt.-%, 0. 5 wt.-% to 4.5 wt.-%, or .0.75 wt.-% to 4.0 wt.-% of the barium magnesium silicate. In a preferred embodiment, the composition comprises 0.75 wt.-% to 2.5 wt.-% of the barium magnesium silicate. In a particularly preferred embodiment, the composition of the present invention comprises 1.0 wt.-% to 2.25 wt.-% of the barium magnesium silicate.

In an embodiment, the barium magnesium silicate has
(a) a light emission with a first peak wavelength in the range from 400 nm to 500 nm, preferably from 420 nm to 460 nm, and a second peak wavelength in the range from 550 nm to 700 nm, preferably from 590 nm to 660 nm, and
(b) an absorption inferior or equal to 20 %, preferably inferior or equal to 15 %, more preferably inferior or equal to 10 %, possibly inferior or equal to 5 %, at a wavelength greater than 440 nm. The absorption may be obtained from a diffuse reflection spectrum. Such a spectrum can be recorded using a Jobin Yvon HORIBA Fluoromax-4+ spectrometer equipped with a Xenon lamp and 2 monochromators (one for excitation wavelength and one for emission wavelength) able to work synchronously. With regard to a product, for each given value of wavelength, a reflection (R_{product}) value (intensity) is obtained, which in the end provides a reflection spectrum (R_{product} in function of wavelength). A first reflection (R_{white}) spectrum of BaSO₄ is recorded between 280 nm and 500 nm. BaSO₄ spectrum represents 100 % of light reflection (referred to as "white"). A second reflection (R_{black}) spectrum of black carbon is recorded between 280 nm and 500 nm. Black carbon spectrum represents 0 % of light reflection (referred to as "black"). The sample reflection (Rₛₐₘₚₗₑ) spectrum is recorded between 280 nm and 500 nm. For each wavelength, the following relationship is calculated: A=l-R, R being equal to (Rₛₐₘₚₗₑ - (R_{black})/(R_{white} - R_{black}) i.e. A=(R_{white} - Rₛₐₘₚₗₑ) /(R_{white} - R_{black}), which represents the absorption at each wavelength and which provides the absorption spectrum (in function of wavelength).

It is preferred that the barium magnesium silicate and the a 2-hydroxyphenylbenzotriazole compound are distributed evenly throughout the matrix comprising a polymer. This ensures homogenous properties of the composition of the present invention.

In an embodiment, the composition of the present invention further comprises an additional inorganic fluorescent material, preferably one that emits blue and/or red light. Suitable inorganic fluorescent materials are *inter alia* described in the second chapter of "Phosphor handbook" (Yen, Shionoya, Yamamoto, CRC Press, 2018).

As polymer materials, polyethylene, polypropylene, polystyrene, polymethylpentene, polybutene, butadiene styrene polymer, polyvinyl chloride, polystyrene, polymethacrylic styrene, styrene-acrylonitrile, acrylonitrile-butadiene-styrene, polyethylene terephthalate, polymethyl methacrylate, polyphenylene ether, polyacrylonitrile, polyvinyl alcohol, polyalkyl vinyl alcohol, acrylonitrile polycarbonate, polyvinylidene chloride, polycarbonate, polyamide, polyacetal, polybutylene terephthalate, polytetrafluoroethylene, ethyl vinylacetate copolymer, ethylene butyl acrylate copolymer, ethylene tetrafluorethylen copolymer, phenol polymer, melamine polymer, urea polymer, urethane, epoxy, unsaturated polyester, polyallyl sulfone, polyarylate, hydroxybenzoic acid polyester, polyetherimide, polycyclohexylenedimethylene terephthalate, polyethylene naphthalate, polyester carbonate, polylactic acid, phenolic resin, silicone, and copolymers of the above can be used.

In a preferred embodiment, the polymer is selected from polyethylenes and copolymers, including low-density polyethylenes (LDPE), linear low-density polyethylenes (LLDPE), high-density polyethylene (HDPE), polyethylenes obtained via metallocene synthesis, ethyl vinylacetate copolymer (EVA), ethylene butyl acrylate copolymer (EBA), polyvinyl chloride (PVC), polyethylene terephthalate (PET), polymethyl methacrylate (PMMA), (co)polyolefins, polyethylene-vinyl alcohol (EVOH), polycarbonate (PC), and mixtures and copolymers based on these (co)polymers.

It is particularly preferred that the polymer comprises polyethylene (PE). It is even more preferred that the polymer comprises linear low-density polyethylenes (LLDPE).

In one embodiment, the composition of the present invention comprises a plasticizer. Suitable plasticizers include, for example, triethylene glycol di-(2-ethylhexanoate) ("3GEH"), triethylene glycol di-(2-ethylbutyrate), triethylene glycol diheptanoate, tetraethylene glycol diheptanoate, dihexyl adipate, dioctyl adipate, hexyl cyclohexyladipate, diisononyl adipate, heptylnonyl adipate, dibutyl sebacate, di(butoxyethyl) adipate, bis(2-(2-butoxyethoxy)ethyl) adipate, and mixtures thereof.

In some embodiments, the plasticizer may be a high refractive index plasticizer. Examples of high refractive index plasticizers include, but are not limited to, esters of a polybasic acid or a polyhydric alcohol, polyadipates, epoxides, phthalates, terephthalates, benzoates, toluoates, mellates and other specialty plasticizers, among others. Examples of suitable plasticizers include, but are not limited to, dipropylene glycol dibenzoate, tripropylene glycol dibenzoate, polypropylene glycol dibenzoate, isodecyl benzoate, 2-ethylhexyl benzoate, diethylene glycol benzoate, propylene glycol dibenzoate, 2,2,4-trimethyl-1,3-pentanediol dibenzoate, 2,2,4-trimethyl-1,3-pentanediol benzoate isobutyrate, 1,3-butanediol dibenzoate, diethylene glycol di-o-toluoate, triethylene glycol di-o-toluoate, dipropylene glycol di-o-toluoate, 1,2-octyl dibenzoate, tri-2-ethylhexyl trimellitate, di-2-ethylhexyl terephthalate, bis-phenol A bis(2-ethylhexaonate), and mixtures thereof. Examples of particularly suitable high refractive index plasticizers are dipropylene glycol dibenzoates, tripropylene glycol dibenzoates, and 2,2,4-trimethyl-1,3-pentanediol dibenzoate.

In one embodiment, the composition of the present invention does not comprise a plasticizer.

The 2-hydroxyphenylbenzotriazole compound is a UV absorber.
In an embodiment, the 2-hydroxyphenylbenzotriazole compound is a compound according to Formula (III): 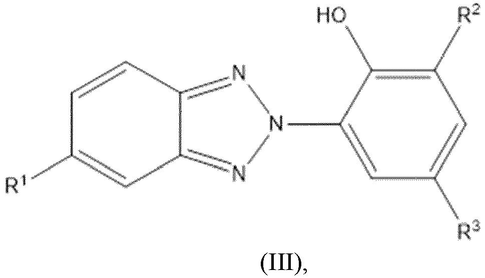 wherein
R¹ is H or Cl, and
R² and R³ are the same or different and are independently chosen from H, C₆-C₁₀ aryl, C₁-C₁₂ alkyl, and (C₁-C₁₂ alkyl)aryl.

Preferably the 2-hydroxyphenylbenzotriazole compound is selected from 2-(2*H*-benzotriazol-2-yl)-4-methylphenol, 2-(2*H*-benzotriazol-2-yl)-4-*tert*butylphenol, 2-(2*H*-benzotriazol-2-yl)-4,6-bis(2-phenyl-2-propanyl)phenol, 2-(2*H*-benzotriazol-2-yl)-4,6-di-*tert*-butylphenol, 2-(5-chloro-2*H*-benzotriazol-2-yl)-4-methyl-6-di-*tert*-butylphenol, 2-(5-chloro-2*H*-benzotriazol-2-yl)-4,6-di-*tert*-butylphenol, 2-(2*H*-benzotriazol-2-yl)-4,6-di-*tert*-pentylphenol, 2-(2*H-*benzotriazol-2-yl)-4-(1,1,3,3-tetramethylbutyl)phenol, 2-(2*H*-benzotriazol-2-yl)-6-(sec-butyl)-4-(*tert*-butyl)phenol, 2-(2*H*-benzotriazol-2-yl)-6-dodecyl-4-methylphenol, 2-(2*H*-benzotriazol-2-yl)-6-(2-phenyl-2-propanyl)-4-(2,4,4-trimethyl-2-pentanyl)phenol and mixtures thereof.

The prefix "C_{y}-Cₓ" as used herein refers to the number of carbon atoms of the respective group.

The term "alkyl" as used herein by itself or as part of another group refers to a straight- or branched-chain aliphatic hydrocarbon containing one to twelve carbon atoms (i.e., C₁-C₁₂ alkyl). Non-limiting exemplary C₁-C₁₀ alkyl groups include methyl, ethyl, propyl, isopropyl, butyl, sec-butyl, tert-butyl, iso-butyl, 3-pentyl, hexyl, heptyl, octyl, nonyl, decyl, and the like. Non-limiting exemplary C₁-C₄ alkyl groups include methyl, ethyl, propyl, isopropyl, butyl, sec-butyl, tert-butyl, and iso-butyl.

The term "aryl" as used herein by itself or as part of another group refers to a monocyclic, bicyclic or tricyclic aromatic ring system having from six to fourteen carbon atoms (i.e., C₆-C₁₄ aryl). Non-limiting exemplary aryl groups include phenyl (abbreviated as "Ph"), naphthyl, phenanthryl, anthracenyl, indenyl, biphenylyl including fluorenyl. The term "aryl" as used herein encompasses phenyls, naphthyls, phenanthryls, anthracenyls, and biphenylyls including fluorenyls that are substituted by one or more substituents, e.g. halo, nitro, cyano, hydroxy, alkoxy, heteroaryl, and alkyl.

Preferably the 2-hydroxyphenylbenzotriazole compound is selected from 2-(2'-hydroxy-5'-methylphenyl)-benzotriazole; 2-(2'-hydroxy-5'-tert-butylphenyl)benzotriazole; 2-(2'-hydroxy-3'-methyl-5'-tert-butylphenyl)-benzotriazole; 2-(2'-hydroxy-5'-cyclohexylphenyl)-benzotriazole; 2-(2'-hydroxy-3',5'-dimethylphenyl)-benzotriazole; 2-(2'-hydroxy-5'-tert-butylphenyl)-5-chlorobenzotriazole; 2-(2'-hydroxy-5-tert-octylphenyl)-2H-benzotriazole; 2-(2'-hydroxy-5-octylphenyl)-2H-benzotriazole; 2-(3',5'-di-tert-butyl-2'-hydroxyphenyl)-5-chlorobenzotriazole; 2-(3',5'-di-tert-amyl-2'-hydroxyphenyl)benzotriazole (commercially available from Cytec Industries Inc. as CYASORB^{®} UV-2337); 2-(3',5'-bis(a,a-dimethylbenzyl)-2'-hydroxyphenyl)benzotriazole; 2-(3'-tert-butyl-2'-hydroxy-5'-(2-octyloxycarbonylethyl)phenyl)benzotriazole; 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 2-[2'-hydroxy-3'-(a,a-dimethylbenzyl)-5'-(1,1,3,3-tetramethyl- butyl)phenyl]benzotriazole; 5-trifluoromethyl-2-(2-hydroxy-3-a-cumyl-5-tert-octylphenyl)-2H-benzotriazole; 2-(2'-hydroxy-5'-(2-hydroxyethyl)phenyl)benzotriazole; 2-(2'-hydroxy-5'-(2-methacryloyloxyethyl)phenyl)benzotriazole; 2-(3'-tert-butyl-5'-methyl-2'-hydroxyphenyl)-5-chloro-benzotriazole; 2-(3'-sec-butyl-5'-tert.butyl-2'-hydroxyphenyl)-benzotriazole; 2-(3',5'-di-tert-butyl-2'-hydroxyphenyl)-benzotriazole; 2-(5'-tert-octyl-2'-hydroxyphenyl)-benzotriazole; 2-(3'-dodecyl-5'-methyl-2'-hydroxyphenyl)-benzotriazole; 2-(3'-tert-butyl-5'-(2-octyloxycarbonylethyl)-2'-hydroxyphenyl)-5-chlorobenzotriazole; 2-(5'-methyl-2'-hydroxyphenyl)-benzotriazole; 2-(5'-tert-butyl-2'-hydroxyphenyl)-benzotriazole; or 2-(2'-hydroxy-3'-di-tert-butylphenyl)-benzotriazole.

In a preferred embodiment, the composition of the present invention comprises 0.01 wt.-% to 0.15 wt.-%, 0.01 wt.-% to 0. 10 or 0.01 wt.-% to 0.07 wt.-% of the 2-hydroxyphenylbenzotriazole compound. In a preferred embodiment, the composition of the present invention comprises 0.01 wt.-% to 0.07 wt.-%, 0.01 wt.-% to 0. 05 wt.-%, 0.015 wt.-% to 0.045 or 0.015 wt.-% to 0.04 wt.-% of the 2-hydroxyphenylbenzotriazole compound. In a particularly preferred embodiment, the composition of the present invention comprises 0.01 wt.-% to 0.03 wt.-% or 0.02 wt.-% to 0.07 wt.-% of the 2-hydroxyphenylbenzotriazole compound. It has surprisingly been found that the mechanical stability with lower amounts of e.g. 0.01 wt.-% to 0.07 wt.-%, 0.01 wt.-% to 0.065 or 0.015 wt.-% to 0.060 wt.-% of 2-hydroxyphenylbenzotriazole compound can be maintained while at the same time not detrimentally affecting the photoconversion effect of the barium magnesium silicate. In addition, it has surprisingly been found that with the composition of the present invention having lower amounts of UV absorber, such as 2-hydroxyphenylbenzotriazole compound, than the prior art compositions, pollination can be facilitated while maintaining mechanical stability. Without being bound to theory, it is believed that the advantageous effect relating to pollination is achieved, as some UV light is still transmitted by the compositions of the present invention, which is believed to be important for the orientation of insects, in particular bumblebees, during pollination.

In an embodiment, the composition of the present invention is a greenhouse film and has a transmittance of light in the range of 300 nm to 780 nm, preferably in the range of 350 nm to 400 nm, more preferably in the range of 370 to 400 nm, of more than 40 %, more than 50 %, or preferably more than 60 %. The transmission for the whole visible range may be measured with a Gardner Haze-gard I (4775) Haze Meter from BYK, for instance according to the method ASTM D1003. In another embodiment, the transmission may be measured with a Spectrometer UV-Vis Perkin Elmer Lambda 750. This method allows to choose the nm range to be measured, for instance 350 to 400 nm. The transmission may refer to a greenhouse film having a thickness of 200 µm.

In a preferred embodiment, the composition does not contain any further UV absorber. Put differently, the composition comprises only (consists of) the 2-hydroxyphenylbenzotriazole compound as UV absorber.

In an embodiment, the composition comprises a further UV absorber, such as an ortho-hydroxyphenyl triazine compound. The ortho-hydroxyphenyl triazine compound can be selected from 4,6-bis-(2,4-dimethylphenyl)-2-(2-hydroxy-4-octyloxyphenyl)-s-triazine; 2-(4, 6-Diphenyl-1,3, 5-triazin-2-yl-)-5-((hexyl)oxyl-phenol; 4,6-bis-(2,4-dimethylphenyl)-2-(2,4-dihydroxyphenyl)-s-triazine; 2,4-bis(2,4-dihydroxyphenyl)-6-(4-chlorophenyl)-s-triazine; 2,4-bis[2-hydroxy-4-(2-hydroxy-ethoxy)phenyl]-6-(4-chlorophenyl)-s-triazine; 2,4-bis[2-hydroxy-4-(2-hydroxy-4-(2-hydroxy-ethoxy)phenyl]-6-(2,4-dimethylphenyl)-s-triazine; 2,4-bis[2-hydroxy-4-(2-hydroxyethoxy)phenyl]-6-(4-bromophenyl)-s-triazine; 2,4-bis[2-hydroxy-4-(2-acetoxyethoxy)phenyl]-6-(4-chlorophenyl)-s-triazine; 2,4-bis(2,4-dihydroxyphenyl)-6-(2,4-dimethylphenyl)-s-triazine; 2,4-bis(4-biphenylyl)-6-[2-hydroxy-4-[(octyloxycarbonyl)ethylideneoxy]phenyl]-s-triazine; 2,4-bis(4-biphenylyl)-6-[2-hydroxy-4-(2-ethylhexyloxy)phenyl]-s-triazine; 2-phenyl-4-[2-hydroxy-4-(3-sec-butyloxy-2-hydroxypropyloxy)phenyl]-6-[2-hydroxy-4-(3-sec-amyloxy-2- hydroxypropyloxy)phenyl]-s-triazine; 2,4-bis(2,4-dimethylphenyl)-6-[2-hydroxy-4(- 3-benzyloxy-2-hydroxypropyloxy)phenyl] -s-triazine; 2,4-bis(2-hydroxy-4-n-butyloxyphenyl)-6-(2,4-di-n-butyloxyphenyl)-s-triazine; 2,4-bis(2,4-dimethylphenyl)-6-[2-hydroxy-4-(3-nonyloxy-2-hydroxypropyloxy)-5-α-cumylphenyl]-s-triazine; methylenebis-{2,4-bis(2,4-dimethylphenyl)-6-[2-hydroxy-4-(3-butyloxy-2-hydroxypropoxy)phenyl]-s-triazine}; methylene bridged dimer mixture bridged in the 3:5', 5:5' and 3:3' positions in a 5:4:1 ratio; 2,4,6-tris(2-hydroxy-4-isooctyloxycarbonyliso-propylideneoxy-phenyl)-s-triazine; 2,4,6,-tris(2-hydroxy-4-octyloxy-phenyl)-1,3,5-triazine; 2,4-bis(2,4-dimethylphenyl)-6-(2-hydroxy-4-hexyloxy-5-α-cumylphenyl)-s-triazine; 2-(2,4,6-trimethylphenyl)-4,6-bis[2-hydroxy-4-(3-butyloxy-2-hydroxypropyloxy)phenyl]-s-triazine; 2,4,6-tris[2-hydroxy-4-(3-sec-butyloxy-2-hydroxypropyloxy)-phenyl]-s-triazine; mixture of 4,6-bis-(2,4-dimethylphenyl)-2-(2-hydroxy-4-(3-dodecyloxy-2-hydroxypropoxy)phenyl)-s-triazine and 4,6-bis-(2,4-dimethylphenyl)-2-(2-hydroxy-4-(3-tridecyloxy-2-hydroxypropoxy)phenyl)-s-triazine; 4,6-bis-(2,4-dimethylphenyl)-2-(2-hydroxy-4(3-(2-ethylhexyloxy)-2-hydroxypropoxy)-phenyl)-s-triazine; 4,6-diphenyl-2-(4-hexyloxy-2-hydroxyphenyl)-s-triazine; and mixtures thereof..

It is preferred that the composition is a film, more preferably a greenhouse film.

The term "film" can be used in a generic sense to include a film, a layer, a sheet, or a structural element having a geometric configuration as a three-dimensional solid whose thickness (the distance between the plane faces) is small when compared with other characteristic dimensions (in particular length, width) of the film. Films are generally used to separate areas or volumes, to hold items, to act as barriers, or as printable surfaces.

The term "film" encompasses monolayers as well as multilayer films. The film within the context of the invention may be used as such or may be deposited on or combined with another substrate, such as another film or glass. This deposit or this combination may be prepared by the known methods of blown film extrusion, coextrusion, lamination and coating for instance. Blown film extrusion is the preferred method to produce regular thin film in the range of 50 µm to 300 µm, preferably in the range of 150 µm to 200 µm. Multilayer films may be formed from one or more layers of composition used according to the invention, combined via multilayer blown film extrusion process. The film may be of various shapes, such as in the form of a plate, a flat sheet, a square, a rectangle, a circle, a wall, a tunnel, an elliptical, a semicircle, or a shelter. The thickness or width of the film is not particularly limited. Typically, greenhouse films have a thickness of from 10 µm to 1000 µm, preferably from 50 µm to 600 µm, more preferably from 100 µm to 400 µm, even more preferably from 125µm to 200 µm.

The film preferably is transparent and flexible.

The term "greenhouse" should be understood herein in its broadest sense as covering any type of shelter used for the protection and growth of crops. For example, they may be plastic greenhouses and large plastic tunnels, glass greenhouses, large shelters, semi-forcing tunnels, flat protective sheets, walls, mulching (mulch film), notably as described in the brochure published by the CIPA (Congres International du Plastique dans l'Agriculture), 65 me de Prony, Paris, " L'évolution de la plasticulture dans le Monde" by Jean-Pierre Jouet. Greenhouse may also refer to gardening kit and kit of germination.

In an embodiment, the composition comprises a light stabilizing additive. Light stabilizing additives can be preferably selected in the family of hindered amine light stabilizer compounds (HALS) and/or in the family of hindered benzoate compounds. In an embodiment the composition comprises 0.1 to 5.0 wt.-%, 0.2 wt.-% to 4.0 wt.-%, or 0.2 wt.-% to 3.0 wt.-% of a HALS compound and/or a hindered benzoate compound.

In a preferred embodiment, the composition comprises a stabilizing amount of a hindered amine light stabilizer compound (HALS) comprising
(a) a functional group according to Formula (IVa): 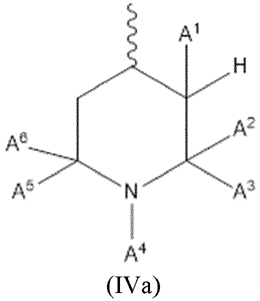
   wherein A⁴ is chosen from: hydrogen; OH; C₁-C₂₀ hydrocarbyl; -CH₂CN; C₁-C₁₂ acyl; or C₁-C₁₈ alkoxy;
   A¹ is chosen from: hydrogen; or C₁-C₈ hydrocarbyl; and
   each of A², A³, A⁵, and A⁶ is independently chosen
   from C₁-C₂₀ hydrocarbyl, or A² and A³ and/or A⁵ and A⁶ taken together with the carbon to which they are attached form a C₅-C₁₀ cycloalkyl; or
(b) a functional group according to Formula (IVb): 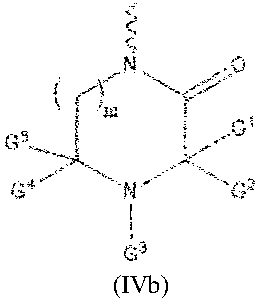 wherein
   m is an integer from 1 to 2;
   G³ is chosen from: hydrogen; OH; C₁-C₂₀ hydrocarbyl; -CH₂CN; C₁-C₁₂ acyl; or C₁-C₁₈ alkoxy; and
   each of G¹, G², G³, and G⁴is independently chosen from C₁-C₂₀ hydrocarbyl; or (c) mixtures of HALS compounds having functional groups according to Formula (IVa) and Formula (IVb).

The term "hydrocarbyl" as used herein is a generic term encompassing aliphatic, alicyclic and aromatic groups having an all-carbon backbone and consisting of carbon and hydrogen atoms. In certain cases, as defined herein, one or more of the carbon atoms making up the carbon backbone may be optionally replaced or interrupted by a specified atom or group of atoms, such as by one or more heteroatom of N, O, and/or S. Examples of hydrocarbyl groups include alkyl, cycloalkyl, cycloalkenyl, carbocyclic aryl, alkenyl, alkynyl, alkylcycloalkyl, cycloalkylalkyl, cycloalkenylalkyl, and carbocyclic aralkyl, alkaryl, aralkenyl and aralkynyl groups. Such hydrocarbyl groups can also be optionally substituted by one or more substituents as defined herein. The examples and preferences expressed below also apply to each of the hydrocarbyl substituent groups or hydrocarbyl containing substituent groups referred to in the various definitions of substituents for compounds of the formulas described herein unless the context indicates otherwise. Preferred non-aromatic hydrocarbyl groups are saturated groups such as alkyl and cycloalkyl groups.

For the purpose of the present disclosure, the term "cycloalkyl" as used by itself or as part of another group refers to saturated and partially unsaturated (containing one or two double bonds) cyclic aliphatic hydrocarbons containing one to three rings having from five to twelve carbon atoms (i.e., C₅-C₁₂ cycloalkyl) or the number of carbons designated. In one embodiment, the cycloalkyl group has two rings. In one embodiment, the cycloalkyl group has one ring. In another embodiment, the cycloalkyl group is chosen from a C₅-C₈ cycloalkyl group. In another embodiment, the cycloalkyl group is chosen from a C₅-C₆ cycloalkyl group. Non-limiting exemplary cycloalkyl groups include cyclopentyl, cyclohexyl, cycloheptyl, cyclooctyl, norbornyl, decalin, adamantyl, cyclohexenyl, and the like.

Exemplary of HALS light stabilizing additive described herein can include one or more of those commercially available from Solvay, such as mixture of 4-hexadecyloxy- and 4-stearyloxy-2,2,6,6-tetramethylpiperidine (e.g., CYASORB^{®} UV-3853), or bis(2,2,6,6-tetramethylpiperidin-4-yl) sebacate; bis(2,2,6,6-tetramethylpiperidin-4-yl)succinate; bis(1,2,2,6,6-pentamethylpiperidin-4-yl)sebacate; bis(1-octyloxy-2,2,6,6-tetramethylpiperidin-4-yl)sebacate; bis(1,2,2,6,6-pentamethylpiperidin-4-yl) n-butyl 3,5-di-tert-butyl-4-hydroxybenzylmalonate; a condensate of 1-(2-hydroxyethyl)-2,2,6,6-tetramethyl-4-hydroxypiperidine and succinic acid; 2,2,6,6-tetramethylpiperidin-4-yl stearate; 2,2,6,6-tetramethylpiperidin-4-yl dodecanate; 1,2,2,6,6-pentamethylpiperidin-4-yl stearate; 1,2,2,6,6-pentamethylpiperidin-4-yl dodecanate; a condensate of N,N'-bis(2,2,6,6-tetramethylpiperidin-4-yl)hexamethylenediamine and 4-tert-octylamino-2,6-dichloro-1,3,5-triazine; tris(2,2,6,6-tetramethylpiperidin-4-yl) nitrilotriacetate; tetrakis(2,2,6,6-tetramethylpiperidin-4-yl)- 1,2,3,4-butanetetracarboxylate; 4-benzoyl-2,2,6,6-tetramethylpiperidine; 4-stearyloxy-2,2,6,6-tetramethylpiperidine; bis(1,2,2,6,6-pentamethylpiperidyl)-2-n-butyl-2-(2-hydroxy-3,5-di-tert-butylbenzyl)malonate; 3-n-octyl-7,7,9,9-tetramethyl-1,3,8-triazaspiro[4.5]decan-2,4-dione; bis(1-octyloxy-2,2,6,6-tetramethylpiperidyl)sebacate; bis(1-octyloxy-2,2,6,6-tetramethylpiperidyl)succinate; a condensate of N,N'-bis(2,2,6,6-tetramethylpiperidin-4-yl)hexamethylenediamine and 4-morpholino-2,6-dichloro-1,3,5-triazine (commercially available from Cytec Industries Inc. as CYASORB^{®} UV-3346); a condensate of N,N'-bis(2,2,6,6-tetramethylpiperidin-4-yl)hexamethylenediamine and 4-morpholino-2,6-dichloro-1,3,5-triazine, methylated (commercially available from Cytec Industries Inc. as CYASORB^{®} UV-3529); a condensate of 2-chloro-4,6-bis(4-n-butylamino-2,2,6,6-tetramethylpiperidyl)-1,3,5-triazine and 1,2-bis(3-aminopropylamino)ethane; a condensate of 2-chloro-4,6-bis(4-n-butylamino-1,2,2,6,6-pentamethylpiperidyl)-1,3,5-triazine and 1,2-bis-(3- aminopropylamino)ethane; 8-acetyl-3-dodecyl-7,7,9,9-tetramethyl-1,3,8-triazaspiro[4.5]decane-2,4-dione; 3-dodecyl-1-(2,2,6,6-tetramethylpiperidin-4-yl)pyrrolidin-2,5-dione; 3-dodecyl-1-(1-ethanoyl-2,2,6,6-tetramethylpiperidin-4-yl)pyrrolidin-2,5-dione; 3-dodecyl-1-(1,2,2,6,6-pentamethylpiperidin-4-yl)pyrrolidine-2,5-dione; a mixture of 4-hexadecyloxy-and 4-stearyloxy-2,2,6,6-tetramethylpiperidine; a mixture of 4-hexadecyloxy-and 4-stearyloxy-1,2,2,6,6-pentamethylpiperidine; a condensate of N,N'-bis(2,2,6,6-tetramethylpiperidin-4-yl)hexamethylenediamine and 4-cyclohexylamino-2,6-dichloro-1,3,5-triazine; a condensate of 1,2-bis(3-aminopropylamino)ethane, 2,4,6-trichloro-1,3,5-triazine and 4-butylamino-2,2,6,6-tetramethylpiperidine; 2-undecyl-7,7,9,9-tetramethyl-1-oxa-3,8-diaza-4-oxospiro[4.5]decane; oxo-piperanzinyl-triazines; a reaction product of 7,7,9,9-tetramethyl-2-cycloundecyl-1-oxa-3,8-diaza-4-oxospiro[4.5]decane and epichlorohydrin; tetrakis(2,2,6,6-tetramethyl-4-piperidyl) butane-1,2,3,4-tetracarboxylate; 1,2,3,4-butanetetracarboxylic acid, tetrakis(1,2,2,6,6-pentamethyl-4-piperidinyl)ester; 1,2,3,4-butanetetracarboxylic acid, 1,2,2,6,6-pentamethyl-4-piperdinyl tridecyl ester; 1,2,3,4-butanetetracarboxylic acid, 2,2,6,6-tetramethyl-4-piperidinyl tridecyl ester; 1,2,3,4-butanetetracarboxylic acid, polymer with 2,2,6,6-tetramethyl-2,4,8,10-tetraoxaspiro[5.5]-undecane-3,9-diethanol,1,2,2,6,6-pentamethyl-4-piperdinyl ester; 1,2,3,4-butanetetracarboxylic acid, polymer with 2,2,6,6-tetramethyl-2,4,8,10-tetraoxaspiro[5.5]-undecane-3,9-diethanol, 2,2,6,6-tetramethyl-4-piperdinyl ester; bis(1-undecanoxy-2,2,6,6-tetramethylpiperidin-4-yl)carbonate; 1-(2-hydroxy-2-methylpropoxy)-2,2,6,6-tetramethyl-4-piperdinol; 1-(2-hydroxy-2-methylpropoxy)-4-octadecanoyloxy-2,2,6,6-tetramethylpiperidine; 1-(4-octadecanoyloxy-2,2,6,6-tetramethylpiperidin-1-yloxy)-2-octadecanoyloxy-2-methylpropane; 1-(2-hydroxyethyl)-2,2,6,6-tetramethyl-4-piperdinol; a reaction product of 1-(2-hydroxyethyl)-2,2,6,6-tetramethyl-4-piperdinol and dimethylsuccinate; 2,2,4,4-tetramethyl-7-oxa-3,20-diazadispiro[5.1.11.2]heneicosan-21-one; the ester of 2,2,6,6-tetramethyl-4-piperidinol with higher fatty acids; 3-dodecyl-1-(2,2,6,6-tetramethyl-4-piperidyl)pyrrolidine-2,5-dione; 1H-Pyrrole-2,5-dione, 1-octadecyl-, polymer with (1-methylethenyl)benzene and 1-(2,2,6,6-tetramethyl-4-piperidinyl)-1H-pyrrole-2,5-dione; piperazinone, 1,1',1"-[1,3,5-triazine-2,4,6-triyltris[(cyclohexylimino)-2,1-ethanediyl]]tris[3,3,5,5-tetramethyl-; piperazinone, 1,1',1"-[1,3,5-triazine-2,4,6-triyltris[(cyclohexylimino)-2,1-ethanediyl]]tris[3,3,4,5,5-pentamethyl-; the reaction product of 7,7,9,9-tetramethyl-2-cycloundecyl-1-oxa-3,8-diaza-4-oxospiro[4.5]decane and epichlorohydrin; the condensate of N,N'-bis(2,2,6,6-tetramethylpiperidin-4-yl)hexamethylenediamine and 4-cyclohexylamino-2,6-dichloro-1,3,5-triazine; the condensate of 1,2-bis(3-aminopropylamino)ethane, 2,4,6-trichloro-1,3,5-triazine and 4-butylamino-2,2,6,6-tetramethylpiperidine; the condensate of N,N'-bis(2,2,6,6-tetramethylpiperidin-4-yl)hexamethylenediamine and 4-morpholino-2,6-dichloro-1,3,5-triazine; the condensate of 2-chloro-4,6-bis(4-n-butylamino-2,2,6,6-tetramethylpiperidyl)-1,3,5-triazine and 1,2-bis(3-aminopropylamino)ethane; the condensate of 2-chloro-4,6-bis(4-n-butylamino-1,2,2,6,6-pentamethylpiperidyl)-1,3,5-triazine and 1,2-bis-(3-aminopropylamino)ethane; 2-[(2-hydroxyethyl)amino]-4,6-bis[N-(1-cyclohexyloxy-2,2,6,6-tetramethylpiperidin-4-yl)butylamino-1,3,5-triazine; propanedioic acid, [(4-methoxyphenyl)-methylene]-bis-(1,2,2,6,6-pentamethyl-4-piperidinyl) ester; tetrakis(2,2,6,6-tetramethylpiperidin-4-yl)-1,2,3,4-butanetetracarboxylate; benzenepropanoic acid, 3,5-bis(1,1-dimethylethyl)-4-hydroxy-, 1-[2-[3-[3,5-bis(1,1-dimethylethyl)-4-hydroxyphenyl]-1-oxopropoxy]ethyl]-2,2,6,6-tetramethyl-4-piperidinyl ester; N-(1-octyloxy-2,2,6,6-tetramethylpiperidin-4-yl)-N'-dodecyloxalamide; tris(2,2,6,6-tetramethylpiperidin-4-yl) nitrilotriacetate; 1,5-dioxaspiro{5,5}undecane-3,3-dicarboxylic acid, bis(1,2,2,6,6-pentamethyl-4-piperidinyl): 1,5-dioxaspiro{ 5,5}undecane-3,3-dicarboxylic acid, bis(2,2,6,6-tetramethyl-4-piperidinyl); the condensate of 1-(2-hydroxyethyl)-2,2,6,6-tetramethyl-4-hydroxypiperidine and succinic acid; the condensate of N,N'-bis(2,2,6,6-tetramethylpiperidin-4-yl)hexamethylenediamine and 4-tert-octylamino-2,6-dichloro-1,3,5-triazine; 1,2,3,4-butanetetracarboxylic acid, 1,2,2,6,6-pentamethyl-4-piperidinyl tridecyl ester; tetrakis(2,2,6,6-tetramethylpiperidin-4-yl)-1,2,3,4-butanetetracarboxylate; 1,2,3,4-butanetetracarboxylic acid, 2,2,6,6-tetramethyl-4-piperidinyl tridecyl ester; tetrakis(1,2,2,6,6-pentamethylpiperidin-4-yl)-1,2,3,4-butanetetracarboxylate; mixture of 2,2,4,4-tetramethyl-21-oxo-7-oxa-3.20-diazaspiro(5.1.11.2)-heneicosane-20-propanoic acid-dodecylester and 2,2,4,4-tetramethyl-21-oxo-7-oxa-3 .20-diazaspiro(5.1.11.2)-heneicosane-20-propanoic acid-tetradecylester; 1H,4H,5H,8H-2,3a,4a,6,7a,8a-hexaazacyclopenta[def]fluorene-4,8-dione, hexahydro-2,6-bis(2,2,6,6-tetramethyl-4-piperidinyl)-; polymethyl[propyl-3-oxy(2',2',6',6'-tetramethyl-4,4'-piperidinyl)]siloxane; polymethyl[propyl-3-oxy(1',2',2',6',6'-pentamethyl-4,4'-piperidinyl)]siloxane; copolymer of methylmethacrylate with ethyl acrylate and 2,2,6,6-tetramethylpiperidin-4-yl acrylate; copolymer of mixed C20 to C24 alpha-olefins and (2,2,6,6-tetramethylpiperidin-4-yl)succinimide; 1,2,3,4-butanetetracarboxylic acid, polymer with b,b,b',b'-tetramethyl-2,4,8,10-tetraoxaspiro[5.5]undecane-3,9-diethanol, 1,2,2,6,6-pentamethyl-4-piperidinyl ester; 1,2,3,4-butanetetracarboxylic acid, polymer with b,b,b',b'-tetramethyl-2,4,8,10-tetraoxaspiro[5.5]undecane-3,9-diethanol, 2,2,6,6-tetramethyl-4-piperidinyl ester copolymer; 1,3-benzenedicarboxamide, N,N'-bis(2,2,6,6-tetramethyl-4-piperidinyl; 1,1'-(1,10-dioxo-1,10-decanediyl)-bis(hexahydro-2,2,4,4,6-pentamethylpyrimidine; ethane diamide, N-(1-acetyl-2,2,6,6-tetramethylpiperidinyl)-N'-dodecyl; formamide, N,N'-1,6-hexanediylbis[N-(2,2,6,6-tetramethyl-4-piperidinyl); D-glucitol, 1,3:2,4-bis-O-(2,2,6,6-tetramethyl-4-piperidinylidene)-; 2,2,4,4-tetramethyl-7-oxa-3,20-diaza-21-oxo-dispiro[5.1.11.2]heneicosane; propanamide, 2-methyl-N-(2,2,6,6-tetramethyl-4-piperidinyl)-2-[(2,2,6,6-tetramethyl-4-piperidinyl)amino]-; 7-oxa-3,20-diazadispiro[5.1.11.2]heneicosane-20-propanoic acid, 2,2,4,4-tetramethyl-21-oxo-, dodecyl ester; N-(2,2,6,6-tetramethylpiperidin-4-yl)-b-aminopropionic acid dodecyl ester; N-(2,2,6,6-tetramethylpiperidin-4-yl)-N'-aminooxalamide; propanamide, N-(2,2,6,6-tetramethyl-4-piperidinyl)-3-[(2,2,6,6-tetramethyl-4-piperidinyl)amino]-; mixture of 4-hexadecyloxy- and 4-stearyloxy-2,2,6,6-tetramethylpiperidine; 3-dodecyl-1-(1,2,2,6,6-pentamethylpiperidin-4-yl)pyrrolidine-2,5-dione; 3-dodecyl-1-(1-ethanoyl-2,2,6,6-pentamethylpiperidin-4-yl)pyrrolidine-2,5-dione; bis(2,2,6,6-tetramethylpiperidin-4-yl)succinate; bis(1,2,2,6,6-pentamethylpiperidin-4-yl) n-butyl 3,5-di-tert-butyl-4-hydroxybenzylmalonate; tris(2,2,6,6-tetramethylpiperidin-4-yl) nitrilotriacetate; 1,1'-(1,2-ethanediyl)bis(3,3,5,5-tetramethylpiperazinone); 4-benzoyl-2,2,6,6-tetramethylpiperidine; 4-stearyloxy-2,2,6,6-tetramethylpiperidine; bis(1,2,2,6,6-pentamethylpiperidyl)-2-n-butyl-2-(2-hydroxy-3,5-di-tert-butylbenzyl)malonate; 3-n-octyl-7,7,9,9-tetramethyl-1,3,8-triazaspiro[4.5]decan-2,4-dione; bis(1-octyloxy-2,2,6,6-tetramethylpiperidyl)sebacate; bis(1-octyloxy-2,2,6,6-tetramethylpiperidyl)succinate; 8-acetyl-3-dodecyl-7,7,9,9-tetramethyl-1,3,8-triazaspiro[4.5]decane-2,4-dione; 3-dodecyl-1-(2,2,6,6-tetramethylpiperidin-4-yl)pyrrolidin-2,5-dione; 3-dodecyl-1-(1-ethanoyl-2,2,6,6-tetramethylpiperidin-4-yl)pyrrolidin-2,5-dione; 3-dodecyl-1-(1,2,2,6,6-pentamethylpiperidin-4-yl)pyrrolidine-2,5-dione; a mixture of 4-hexadecyloxy- and 4-stearyloxy-2,2,6,6-tetramethylpiperidine; 2-undecyl-7,7,9,9-tetramethyl-1-oxa-3,8-diaza-4-oxospiro[4.5]decane; 1,5-dioxaspiro{ 5,5}undecane-3,3-dicarboxylic acid, bis(2,2,6,6-tetramethyl-4-piperidinyl) and 1,5-dioxaspiro{ 5,5}undecane-3,3-dicarboxylic acid, bis(1,2,2,6,6-pentamethyl-4-piperidinyl); N1-(β-hydroxyethyl)3,3-pentamethylene-5,5-dimethylpiperazin-2-one; N1-tert-octyl-3,3,5,5-tetramethyl-diazepin-2-one; N1-tert-octyl-3,3-pentamethylene-5,5-hexamethylene-diazepin-2-one; N1-tert-octyl-3,3-pentamethylene-5,5-dimethylpiperazin-2-one; trans-1,2-cyclohexane-bis-(N1-5,5-dimethyl-3,3-pentamethylene-2-piperazinone; trans-1,2-cyclohexane-bis-(N1-3,3,5,5-dispiropentamethylene-2-piperazinone); N1-isopropyl-1,4-diazadispiro-(3,3,5,5)pentamethylene-2-piperazinone; N1-isopropyl-1,4-diazadispiro-3,3-pentamethylene-5,5-tetramethylene-2-piperazinone; N1-isopropyl-5,5-dimethyl-3,3-pentamethylene-2-piperazinone; trans-1,2-cyclohexane-bis-N1-(dimethyl-3,3-pentamethylene-2-piperazinone); N1-octyl-5,5-dimethyl-3,3-pentamethylene-1,4-diazepin-2-one; N1-octyl-1,4-diazadispiro-(3,3,5,5)pentamethylene-1,5-diazepin-2-one; TINUVIN^{®} XT 200 (available from BASF); or TINUVIN^{®} NOR 371 (available from BASF), TINUVIN^{®} NOR HALS 356 (available from BASF) and mixtures thereof.

In another embodiment, the composition comprises an additive selected from light stabilizing additives, anti-oxidants, diffusion additives, such as Chinese clay or minerals, plasticizers, flame retardants, dyes, optical brighteners, lubricants, antiblocking agents, matting agents, processing agents, elastomers or elastomeric compositions, for example acrylic copolymers or methacrylate-butadienestyrene copolymers, for improving the flexibility or mechanical strength of the films, adhesion agents, for example polyolefins grafted with maleic anhydride allowing adhesion to polyamide, dispersants allowing better distribution of the silicate in the material or any other additive required for the preparation of a structure of multilayer thermoplastic films, especially those known and often used for making films for greenhouses, for example nondrip or anti-misting additives, and catalysts.

In a preferred embodiment, the composition further comprises an additive selected from antioxidants, anti-fogging agents, anti-dripping agents, anti-block agents, anti-static agents, light diffusers, plasticizers, flame retardants, optical brighteners, lubricants, processing agents, elastomers, adhesion agents, dispersants, and mixtures thereof.

In a preferred embodiment, the composition further comprises an additive selected from anti-oxidant, plasticizers, flame retardants, optical brighteners, lubricants, processing agents, elastomers, adhesion agents, dispersants, and mixtures thereof.

In a preferred embodiment the composition comprises:
(a) 80 wt.-% to 98.9 wt.-% of the matrix material comprising a polymer;
(b) 0.75 wt.-% to 2.5 wt.-% of Ba_{2.7}Eu_{0.3}Mg_{0.9}Mn_{0.1}Si₂O₈ and/or Ba_{2.94}Eu_{0.06}Mg_{0.95}Mn_{0.05}Si₂O₈; and
(c) 0.02 wt.-% to 0.15 wt.-% of the 2-hydroxyphenylbenzotriazole compound.

In a preferred embodiment the composition comprises:
(a) 85 wt.-% to 98.4 wt.-% of the matrix material comprising a polymer;
(b) 1.0 wt.-% to 3.0 wt.-% of Ba_{2.7}Eu_{0.3}Mg_{0.9}Mn_{0.1}Si₂O₈ and/or Ba_{2.94}Eu_{0.06}Mg_{0.95}Mn_{0.05}Si₂O₈;
(c) 0.02 wt.-% to 0.15 wt.-% of the 2-hydroxyphenylbenzotriazole compound; and
(d) 0.5 to 3.0 wt.-% of the hindered amine light stabilizing additive.

In a preferred embodiment, the present invention relates to a composition comprising:
(a) 80 wt.-% to 99 wt.-% of a matrix material comprising a polymer;
(b) 0.5 wt.-% to 5 wt.-% of a barium magnesium silicate; and
(c) 0.01 wt.-% to 0.07 wt.-% of a 2-hydroxyphenylbenzotriazole compound.

In a preferred embodiment the composition comprises:
(a) 80 wt.-% to 98.9 wt.-% of the matrix material comprising a polymer;
(b) 0.75 wt.-% to 2.5 wt.-% of Ba_{2.7}Eu_{0.3}Mg_{0.9}Mn_{0.1}Si₂O₈ and/or Ba_{2.94}Eu_{0.06}Mg_{0.06}Mn_{0.05}Si₂O₈; and
(c) 0.02 wt.-% to 0.06 wt.-% of the 2-hydroxyphenylbenzotriazole compound.

In a preferred embodiment the composition comprises:
(a) 85 wt.-% to 98.4 wt.-% of the matrix material comprising a polymer;
(b) 1.0 wt.-% to 3.0 wt.-% of Ba_{2.7}Eu_{0.3}Mg_{0.9}Mn_{0.1}Si₂O₈ and/or Ba_{2.94}Eu_{0.06}Mg_{0.95}Mn_{0.05} Si₂O₈;
(c) 0.02 wt.-% to 0.06 wt.-% of the 2-hydroxyphenylbenzotriazole compound; and
(d) 0.5 to 3.0 wt.-% of the hindered amine light stabilizing additive.

In an embodiment, the barium magnesium silicate and the 2-hydroxyphenylbenzotriazole compound are dispersed throughout the matrix material.

The invention also relates to the use of a barium magnesium silicate, as defined in the above embodiments, for preparing a greenhouse film, wherein the barium magnesium silicate is in the form of a powder; or is a mixture with a polymer, the mixture being in the form of a granulate. In a preferred embodiment, the barium magnesium silicate is used as a "masterbatch" granulate comprising the barium magnesium silicate and a polymer. The polymer used for these granulates is selected as described above. In a preferred embodiment, the polymer is selected in the group of polyolefins such as polyethylene and more preferred the polymer is the same as the main polymer of the matrix. In a preferred embodiment, the content of barium magnesium silicate in the masterbatch is between 10 and 40 wt%.

The incorporation of the barium magnesium silicate and optional further components into the polymer may be carried out by known methods such as dry blending in the form of a powder, or wet mixing in the form of solutions, dispersions or suspensions for example in an inert solvent, water or oil. The barium magnesium silicate and further additives may be incorporated, for example, before or after melting or also by applying the dissolved or dispersed additive or additive mixture to the polymer material, with or without subsequent evaporation of the solvent or the suspension/dispersion agent. They may be added directly into the processing apparatus (e.g. extruders, internal mixers), e.g. as a dry mixture or powder or as solution or dispersion or suspension or melt. In particular, a first process comprises mixing the barium magnesium silicate (optionally containing BaSiO₄, BaMgSiO₄, and/or Ba₂MgSi₂O₇) and optionally further additives in a polymer compound in melt form and optionally subjecting the mixture to high shear, for example in a twin-screw extrusion device, in order to achieve good dispersion. Another process comprises mixing the further additive(s) to be dispersed with the monomers in the polymerization medium, and then in performing the polymerization.

Another process comprises mixing with a polymer in melt form, a masterbatch mixture of polymer and of dispersed additives, for example prepared according to one of the processes described above. Polymer for the masterbatch and polymer of the matrix may be of the same type or may also be different. The two polymers are preferably compatible so as to form a homogeneous mixture. For instance, when a polymer is an ethylene-vinyl acetate copolymer, the other polymer may be the same ethylene-vinyl acetate copolymer or a different one or may also be a compatible polymer, like for instance a polyethylene. The masterbatch is prepared by the same conventional technique described above, for instance it can be prepared with an extruder. The interest of using a masterbatch is that the particles can be well predispersed using a mixing equipment exhibiting high shear rates. The various additives (e.g. crosslinking agent(s), auxiliary agent(s) described above) may be present in any one of the polymers or may be added separately.

It is preferred that the composition of the present invention is prepared by a process comprising the step of extruding
(i) a polymer (polymer 1) and the barium magnesium silicate, or
(ii) a polymer (polymer 1) and a masterbatch comprising a mixture of barium magnesium silicate pre-dispersed in a polymer (polymer 2).

The barium magnesium silicate may be introduced, for example, in the form of a solid powder or in the form of a dispersion in water or in an organic dispersant. It is also possible to directly disperse the silicate compound in powder form in the matrix, for example by stirring, or alternatively in preparing a powder concentrate in liquid or pasty medium, which is then added to the matrix. The concentrate may be prepared in a water-based or solvent medium, optionally with surfactants, water-soluble or hydrophobic polymers, or alternatively polymers comprising hydrophilic and hydrophobic ends, which may be polar or nonpolar, required for stabilisation of the mixture in order to avoid its decantation.

The invention further relates to the use of the composition of the present invention as a greenhouse film for facilitating crop growing.

The crop is not particularly limited and may refer to any crop, i.e. a plant or plant product that can be grown and harvested for profit or subsistence. By use, crops fall into six categories: food crops, feed crops, fiber crops, oil crops, ornamental crops, and industrial crops. The expression "facilitating crop growing" may be understood to refer to an increase in plant growth, i.e. increase in biomass. In an embodiment, plant growth is increased by at least 5 wt.-%, by at least 10 wt.-% or by at least 15 wt.-%.

In an embodiment, the composition of the present invention facilitates crop pollination. An increase in crop pollination is difficult to measure directly but may be measured by an increase in fruit development. Thus, in an embodiment, the number of fruits produced increases by at least 5 wt.-%, by at least 10 wt.-% or by at least 15 wt.-%. Same trend is observed for flowers with an increase by at least 5%, by at least 10% or by at least 15% of the number of flowers or stems.

The invention also relates to a kit of part comprising
(b) barium magnesium silicate, and
(c) a 2-hydroxyphenylbenzotriazole compound;
wherein the wt.-ratio of (b) the barium magnesium silicate to (c) the 2-hydroxyphenylbenzotriazole compound is 4:1 to 200:1.

In an embodiment, the wt.-ratio of (b) the barium magnesium silicate to (c) the 2-hydroxyphenylbenzotriazole compound is 8:1 to 150:1.

### EXAMPLES

### Example 1: Preparation of Barium Magnesium Silicate according to invention

Particles of Ba_{2.7}Eu_{0.3}Mg_{0.9}Mn_{0.1}Si₂O₈ (BMS) are synthetized according to the process as follows:
An aqueous solution was made up from a mixture of barium, magnesium, europium and manganese nitrates with the following composition :
Ba(NO₃)₂ 113.51g
Mg(NO₃)₂ . 6H₂O 37.11g
Mn(NO₃)₂ . 4H₂O 4.00g
Eu(NO₃)₃ 40.44g
Water was added to this nitrate mixture to reach a final cationic concentration of 0.27 mol/l. A fumed silica (specific surface: 50 m²/g)
suspension was also prepared with a Si concentration of 0.71 mol/l. The nitrate solution and the suspension of fumed silica were mixed to obtain a global suspension.

The global suspension was dried in a spray dryer with an input temperature of 350 °C and an output temperature of 140 °C. The dried product was further calcined at 900 °C for 6 hours under air and then at 1200 °C for 6 hours under Ar/H₂2 (95/5 %vol) atmosphere. The particles have a size D50 of 5.2 µm.

These particles of BMS exhibit:
(a) a light emission with a first peak wavelength of 438 nm and a second peak wavelength in the range of 620 nm, and
(b) an absorption inferior to 10 % at a wavelength greater than 440 nm.

### Example 2: Preparation of a masterbatch MB 1 comprising BMS of Example 1 according to invention

A masterbatch comprising 90 % by weight of a low density polyethylene (LDPE 158BW from Exxon Mobil) and 10 % by weight of BMS was prepared using a co-rotating twin-screw extruder type Clextral D32 (diameter 32 mm and LID ratio of 40). For the LDPE a K-tron KT20 batcher is used. For the BMS a brabender DDSR 20 batcher is used.

The amount of BMS in MB 1 is checked by the ash amount. 10 g of MB 1 with BMS are weighted ( m1) and introduced into an alumina crucible and weighted again (m2). The difference between the total mass (m2) and the mass of the MB 1 with BMS (m1) gives the mass of the crucible (m3). Then the crucible is introduced into the furnace and it is heated up to 600 °C.A plateau was maintained for 30 min at 600 °C. The crucible is allowed to cool down and then the residual mass with the crucible is weighted (m4). The difference between the final mass (m4) and mass of the crucible (m2) divided by the initial mass of the MB 1 with BMS (m1) gives the percentage of BMS introduced into the MB.

### Example 3: Method of preparation of the films according to invention

All films are produced according to the same recipe targeting a film of about 200 µm thickness and containing 2 wt% of barium magnesium silicate (BMS) when BMS is included. General recipe is as below:
NOVAPOL^{®} PF-0218 LLDPE is selected as the matrix polymer and is supplied from Nova Chemicals. The LLDPE is weighed out and placed in an antistatic bag for each formulation. The additives for each formulation are also weighed out individually and added to the appropriate antistatic bags. The formulations are then mixed well and compounded on a twin-screw extruder. Extruder specifications: Werner & Pfleiderer Coperion twin-screw extruder, type ZSK-30, 30 mm diameter screws, co-rotating , electrically heated, water cooled barred, 30:1 L/D, (9) total barrel segments with (1) feed, (3) vented, (1) side feeder, (4) non-vented, (1) spacer, 10.4:1 gearbox ratio, driven by 15 hp, AC motor and VFD controller, with control panel with Eurotherm controllers.

The next day the films were extruded on a single-screw extruder with a slit die and a roll stand. The extruder and roll stand speed was adjusted to achieve the desired film thickness.

Each film according to invention (F1 and F2) contains:
- 2 % wt BMS added through masterbatch MB 1 containing 10 wt% BMS
- 0.02 (F1) or 0.04 (F2) wt% of 2-hydroxyphenylbenzotriazole UV absorber.

This 2-hydroxyphenyl benzotriazole is commercial Tinuvin^{®} 326 UV light stabilizer from BASF.
- 0.08 wt% of Cyanox^{®} 2777 which is a commercial antioxidant additive from Solvay.
- 1.35 wt% of commercial light stabilizing additive (hindered amine light stabilizer) Tinuvin^{®} NOR^{™} 371.
- balance of the composition to 100 wt.-% is LLDPE

3 comparative film (CF1 to CF3) compositions have been prepared with same ingredients but the following changes:
- CF1 has BMS additive (2 wt%) but no light stabilizeres
- CF2 has light stabilizer additives but no BMS additive .
- CF3 contains all components as in examples F1 and F2 but higher concentration of benzotriazole UV absorber additive with 0.08 wt%.

### Example 4: Aging of the films

Films are aged in a QUV - 340 commercial equipment according to ASTM G 154, Cycle 1 with S treatment every 2 weeks.

The films are placed into an enclosed chamber. The samples are weathered according to ASTM G154 Cycle 1 conditions: Wavelength of 340 nm, Irradiance 0.89 W/m², and 12 hour weathering cycle: 8 hours of UV and 4 hours of condensation. Underneath the films, there is a pan of sulphur powder that is heated until sulphur vapour is released. The duration of the exposure depends on the desired severity of the treatment. Halfway through the treatment, the films are rotated and shuffled for even exposure to the sulphur vapour. In this study, S treatment is performed every 2 weeks (336 hours aging) and repeated 4 times - about 500 ppm S is added at each S treatment - Total S added at the end of the weathering test is approx. 2000 ppm S.

### Example 5: Characterization of the films

Each films are characterised by the following methods 5.1 to 5.3:

### 5.1 Photoconversion measurement before aging and after 1350 h aging according to the following method:

Light emission spectrum is obtained using a Jobin Yvon HORIBA Fluoromax-4+ equipped with a Xenon lamp and 2 monochromators (one for excitation wavelength and one for emission wavelength). The excitation wavelength is fixed at 370 nm and the spectrum is recorded between 390 and 750 nm. The photoconversion is defined as the emission intensity value at 630 nm. The photoconversion of the film CF1 (BMS 2 wt% no UVA) is considered as the reference and normalized at 100. The photoconversion of the other films are reported as relative to the photoconversion of the film CF1.

### 5.2 Light transmittance measured before aging according to the following method:

Transmission is measured for all samples, in addition to references: white (total transmittance) & black (beam blocker) ranging from 200-500 nm. The transmission is measured with a Spectrometer UV-Vis Perkin Elmer Lambda 750. With regard to a film, for each given value of wavelength, a transmittance (Tfilm) value (intensity) is obtained, which in the end provides a transmittance spectrum (Tfilm in function of wavelength). A first transmittance (Twhite) spectrum of Spectralon is recorded between 200 nm and 500 nm. Spectralon spectrum represents 100% of light transmission (referred to as "white"). A second transmittance (Tblack) spectrum using a beam blocker is recorded between 200 nm and 500 nm. Black spectrum represents 0% of light transmission (referred to as "black"). For each wavelength, the following relationship is calculated: T being equal to (T_{film} - T_{black})/(T_{white} -T_{black}) which represents the transmittance at each wavelength and which provides the transmittance spectrum (in function of wavelength). The T values represented in the table are measured between 370 and 400 nm.

### 5.3 Mechanical properties of the film after 1000 hours and 1350 hours aging using elongation at break method:

For physical testing, we cut the samples using a die (ISO 527-2-1993 Type 5B) from a sheet of film and let them condition for 24 hours in a humidity controlled room. For testing, the microtensile sample is placed in between two sets of pressurized grips that hold the sample in place at the top and bottom. The thickness and width information are input into the testing program (Testworks Elite) and then the test is started. The microtensile is pulled until it breaks and the program calculates the % elongation and stress at break for us.

All films show significant transmittance between 370 and 400 nm, except CF 3 (BMS film with high benzotriazole) that shows transmittance that is close to lower acceptable limits for efficient pollination. On the other hand, F 1 and F2 (both with BMS but medium (F2) or low (F1) benzotriazole content) show high photoconversion efficiency both before, and in particular after aging. Photoconversion efficiency of (F 1) and (F2) films is significantly higher than with CF3 which contains a high quantity of benzotriazole. For both films according to invention F1 and F2, mechanical properties are also good because elongation at break remains far above 40 % after 1000 h aging. Mechanical resistance of films F 1 and F2 according to invention is identical to reference film CF2 (no BMS, high benzotriazole) or CF 3 (BMS, high benzotriazole). When aging is longer (1350 h), there is a benefit with medium loading of benzotriazole (F2) that keeps high mechanical resistance after 1350 h aging. As a consequence films F 1 and F2 according to invention are able to meet both high and durable photoconversion efficiency with excellent mechanical properties over time. Also the transmittance is high, helping pollination by insects and plant yield.

**Table 1: Composition of Films 1 and 2 (F1 and F2) and Comparative Films 1 to 3 (CF1 to CF3); values for components in wt. %**

| | CF1 - BMS Film without benzotriazole | CF2 - Standard Film high benzotriazole, no BMS | CF3 - BMS Film with high benzotriazole | F1 - BMS film with low benzotriazole | F2 - BMS Film with medium benzotriazole |
|---|---|---|---|---|---|
| LLDPE | 79.92 | 98.49 | 78.49 | 78.55 | 78.53 |
| Tinuvin^{®} 326 | - | 0.08 | 0.08 | 0.02 | 0.04 |
| Tinuvin ^{®} NOR^{™} 371 | - | 1.35 | 1.35 | 1.35 | 1.35 |
| CYANOX^{®} 2777 | 0.08 | 0.08 | 0.08 | 0.08 | 0.08 |
| BMS Masterbatch* | 20.00 | - | 20.00 | 20.00 | 20.00 |
| Total | 100 | 100 | 100 | 100 | 100 |
| Transmittance at 370 nm to 400 nm (films before aging) | 75% | 53% | 43% | 60% | 56% |
| Normalized photoconversion before aging | 100% | 0% | 50% | 68% | 68% |
| Normalized Photoconversion (after 1000 hours) | breaks | 0% | 70% | 85% | 85% |
| Normalized Photoconversion (after 1350 hours) | breaks | 0% | 56% | 80% | 85% |
| Retention of Elongation at break (after 1000 hours) | breaks | 88% | 97% | 72% | 88% |
| Retention of Elongation at break (after 1350 hours) | breaks | 5% | 20% | 8% | 55% |
| Observations | Not enough mechanical strength | Standard film, without photoconversion | Low mechanical strength | Low mechanical strength | Superior strength, photoconversion and transmittance |

| | | | | | |
|---|---|---|---|---|---|
| *Masterbatch comprises 90 % Novapol PF-0218 and 10% barium magnesium silicate. | | | | | |

## Claims

1. A composition comprising:
(a) 80 wt.-% to 99 wt.-% of a matrix material comprising a polymer;
(b) 0.5 wt.-% to 5.0 wt.-% of a barium magnesium silicate; and
(c) 0.01 wt.-% to 0.15 wt.-% of a 2-hydroxyphenylbenzotriazole compound.

2. The composition according to claim 1, wherein the barium magnesium silicate is of Formula (I):
Ba₍₃₋ₓ₎EuₓMg_{(1-y)}Mn_{y}Si₂O₈ (I),
wherein
0<x<1.5 and 0<y<0.5, preferably 0<x<0.75 and 0<y<0.25, more preferably 0.03<x<0.60 and 0.03<y<0.15.

3. The composition according to claim 1 or 2, wherein the composition comprises 0.5 wt.-% to 3.0 wt.-% of Ba_{2.7}Eu_{0.3}Mg_{0.9}Mn_{0.1}Si₂O₈ and/or Ba_{2.94}Eu_{0.06}Mg_{0.95}Mn_{0.05}Si₂O₈.

4. The composition according to any one of claims 1 to 3, wherein the polymer is selected from polyethylenes and copolymers, including low-density polyethylenes (LDPE), linear low-density polyethylenes (LLDPE), high-density polyethylene (HDPE), polyethylenes obtained via metallocene synthesis, ethyl vinylacetate copolymer (EVA), ethylene butyl acrylate copolymer (EBA), polyvinyl chloride (PVC), polyethylene terephthalate (PET), polymethyl methacrylate (PMMA), (co)polyolefins, polyethylene-vinyl alcohol (EVOH), polycarbonate (PC), and mixtures and copolymers based on these (co)polymers.

5. The composition according to any one of claims 1 to 4, wherein the barium magnesium silicate has
(a) a light emission with a first peak wavelength in the range from 400 nm to 500 nm, preferably from 420 nm to 460 nm, and a second peak wavelength in the range from 550 nm to 700 nm, preferably from 590 nm to 660 nm, and
(b) an absorption inferior or equal to 20%, preferably inferior or equal to 15%, more preferably inferior or equal to 10%, possibly inferior or equal to 5%, at a wavelength greater than 440 nm.

6. The composition according to any one of claims 1 to 5, wherein the 2-hydroxyphenylbenzotriazole compound is a compound according to Formula (III): 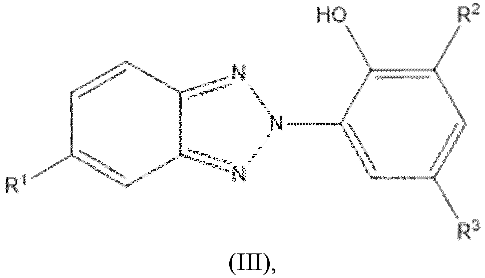 wherein
R¹ is H or Cl, and
R² and R³ are the same or different and are independently chosen from H, C₆-C₁₀ aryl, C₁-C₁₂ alkyl, and (C₁-C₁₂ alkyl)aryl;
wherein preferably the 2-hydroxyphenylbenzotriazole compound is selected from 2-(2'-hydroxy-5'-methylphenyl)-benzotriazole; 2-(2'-hydroxy-5'-tert-butylphenyl)benzotriazole; 2-(2'-hydroxy-3'-methyl-5'-tert-butylphenyl)-benzotriazole; 2-(2'-hydroxy-5'-cyclohexylphenyl)-benzotriazole; 2-(2'-hydroxy-3',5'-dimethylphenyl)-benzotriazole; 2-(2'-hydroxy-5'-tert-butylphenyl)-5-chlorobenzotriazole; 2-(2'-hydroxy-5-tert-octylphenyl)-2H-benzotriazole; 2-(2'-hydroxy-5-octylphenyl)-2H-benzotriazole; 2-(3',5'-di-tert-butyl-2'-hydroxyphenyl)-5-chlorobenzotriazole; 2-(3',5'-di-tert-amyl-2'-hydroxyphenyl)benzotriazole; 2-(3',5'-bis(a,a-dimethylbenzyl)-2'-hydroxyphenyl)benzotriazole; 2-(3'-tert-butyl-2'-hydroxy-5'-(2-octyloxycarbonylethyl)phenyl)benzotriazole; 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 2-[2'-hydroxy-3'-(a,a-dimethylbenzyl)-5'-(1,1,3,3-tetramethyl- butyl)phenyl]benzotriazole; 5-trifluoromethyl-2-(2-hydroxy-3-a-cumyl-5-tert-octylphenyl)-2H-benzotriazole; 2-(2'-hydroxy-5'-(2-hydroxyethyl)phenyl)benzotriazole; 2-(2'-hydroxy-5'-(2-methacryloyloxyethyl)phenyl)benzotriazole; 2-(3'-tert-butyl-5'-methyl-2'-hydroxyphenyl)-5-chloro-benzotriazole; 2-(3'-sec-butyl-5'-tert.butyl-2'-hydroxyphenyl)-benzotriazole; 2-(3',5'-di-tert-butyl-2'-hydroxyphenyl)-benzotriazole; 2-(5'-tert-octyl-2'-hydroxyphenyl)-benzotriazole; 2-(3'-dodecyl-5'-methyl-2'-hydroxyphenyl)-benzotriazole; 2-(3'-tert-butyl-5'-(2-octyloxycarbonylethyl)-2'-hydroxyphenyl)-5-chlorobenzotriazole; 2-(5'-methyl-2'-hydroxyphenyl)-benzotriazole; 2-(5'-tert-butyl-2'-hydroxyphenyl)-benzotriazole;and 2-(2'-hydroxy-3'-di-tert-butylphenyl)-benzotriazole.

7. The composition according to any one of claims 1 to 6, wherein the composition is a film, preferably a greenhouse film.

8. The composition according to any one of claims 1 to 7, wherein the composition comprises a stabilizing amount of a hindered amine light stabilizing compound (HALS) comprising
(a) a functional group according to Formula (IVa): 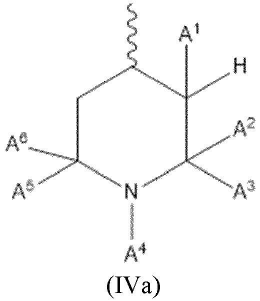
wherein A⁴ is chosen from: hydrogen; OH; C₁-C₂₀ hydrocarbyl; -CH₂CN; C₁-C₁₂ acyl; or C₁-C₁₈ alkoxy;
A¹ is chosen from: hydrogen; or C₁-C₈ hydrocarbyl; and
each of A², A³, A⁵, and A⁶ is independently chosen
from C₁-C₂₀ hydrocarbyl, or A² and A³ and/or A⁵ and A⁶ taken together with the carbon to which they are attached form a C₅-C₁₀ cycloalkyl; or
(b) a functional group according to Formula (IVb): 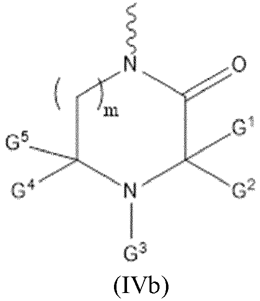 wherein
m is an integer from 1 to 2;
G³ is chosen from: hydrogen; OH; C₁-C₂₀ hydrocarbyl; -CH₂CN; C₁-C₁₂ acyl; or C₁-C₁₈ alkoxy; and
each of G¹, G², G³, and G⁴is independently chosen from C₁-C₂₀ hydrocarbyl; or
(c) mixtures of HALS compounds having functional groups according to Formula (IVa) and Formula (IVb).

9. The composition according to any one of claims 1 to 8, wherein the composition further comprises an additive selected from antioxidants, anti-fogging agents, anti-dripping agents, anti-block agents, anti-static agents, light diffusers, plasticizers, flame retardants, optical brighteners, lubricants, processing agents, elastomers, adhesion agents, dispersants, and mixtures thereof.

10. The composition according to any one of claims 1 to 9, wherein the composition comprises:
(a) 80 wt.-% to 99 wt.-% of the matrix material comprising a polymer;
(b) 0.75 wt.-% to 2.5 wt.-% of Ba_{2.7}Eu_{0.3}Mg_{0.9}Mn_{0.1}Si₂O₈ and/or Ba_{2.94}Eu_{0.06}Mg_{0.95}Mn_{0.05}Si₂O₈; and
(c) 0.02 wt.-% to 0.15 wt.-% of the 2-hydroxyphenylbenzotriazole compound.

11. The composition according to any one of claims 1 to 10, wherein the barium magnesium silicate and the 2-hydroxyphenylbenzotriazole compound are dispersed throughout the matrix material.

12. A film, preferably a greenhouse film, comprising the composition according to any one of claims 1 to 11

13. Use of barium magnesium silicate for preparing the composition according to any one of claims 1 to 11, wherein the barium magnesium silicate is in the form of a powder; or is a mixture with a polymer, the mixture being in the form of a granulate.

14. Use of the composition according to any one of claims 1 to 11 as a greenhouse film for facilitating crop growing.

15. The use according to claim 13, wherein the composition facilitates crop pollination.

16. Kit of part comprising
(b) barium magnesium silicate, and
(c) a 2-hydroxyphenylbenzotriazole compound;
wherein the wt.-ratio of (b) the barium magnesium silicate to (c) the 2-hydroxyphenylbenzotriazole compound is 4:1 to 200:1.
